# EUROPÄISCHE PATENTSCHRIFT

(11) **EP 2 456 969 B1**
(45) Veröffentlichungstag und Bekanntmachung des Hinweises auf die Patenterteilung: **18.09.2013**
(21) Anmeldenummer: 10736663.5
(22) Anmeldetag: 19.07.2010
(51) Int. Cl.: F02M 25/07, B01F 5/04

(54) **BRENNKRAFTMASCHINE UND FRISCHLUFTANLAGE**
INTERNAL COMBUSTION ENGINE AND FRESH AIR SYSTEM
MOTEUR À COMBUSTION INTERNE ET INSTALLATION D'AIR FRAIS

(30) Priorität: 24.07.2009 DE 102009034653
(43) Veröffentlichungstag der Anmeldung: 30.05.2012
(73) Patentinhaber: Mahle International GmbH, 70376 Stuttgart (DE)
(72) Erfinder: ELSÄSSER, Alfred, 75210 Keltern (DE); LÜDDECKE, Bernhardt, 67259 Großniedesheim (DE)
(74) Vertreter: BRP Renaud & Partner
(86) Internationale Anmeldenummer: PCT/EP2010/060419
(87) Internationale Veröffentlichungsnummer: WO 2011/009835

(56) Entgegenhaltungen:
- WO-A1-02/055866
- WO-A1-2008/095658
- DE-A1- 3 440 328
- DE-A1-102004 025 254
- FR-A1- 2 847 947
- FR-A1- 2 908 473
- US-A- 4 498 786
- US-A1- 2005 072 409

## Beschreibung

Die vorliegende Erfindung betrifft eine Brennkraftmaschine, insbesondere eines Kraftfahrzeugs, mit den Merkmalen des Oberbegriffs des Anspruchs 1. Die Erfindung betrifft außerdem eine Frischluftanlage für eine derartige Brennkraftmaschine.

Üblicherweise umfasst eine Brennkraftmaschine, insbesondere wenn sie in einem Kraftfahrzeug zur Anwendung kommt, einen Kolbenmotor, der mindestens einen Brennraum aufweist, sowie eine Frischluftanlage zum Zuführen von Frischluft zum wenigstens einen Brennraum. Diese Frischluftanlage umfasst zumindest eine Frischluftleitung, in der eine Frischluftströmung in Richtung zum jeweiligen Brennraum geführt ist.

Bei aufgeladenen Brennkraftmaschinen, bei denen also in der Frischluftanlage eine Ladeeinrichtung angeordnet ist, kann es bei kleinen Drehzahlen und hohen Lasten zu einer Vorentflammung kommen, was eine Beschädigungsgefahr für den Kolbenmotor darstellt. Eine derartige Vorentflammung kann insbesondere bei Ottomotoren mit Direkteinspritzung auftreten. Bei einer derartigen Vorentflammung entzündet sich das Kraftstoff-Luft-Gemisch während der Verdichtung von selbst, also bevor die reguläre Verbrennung mittels eines Zündfunkens eingeleitet werden kann. Die Vorentflammung unterscheidet sich dadurch vom sogenannten Klopfen, bei dem erst nach der regulären Zündung eine Selbstzündung des noch unverbrannten Gemischs erfolgt. Als Ursache für die Vorentflammung kommen unter anderem sogenannte Hotspots in Betracht, also lokal begrenzte Stellen im jeweiligen Brennraum, die aufgrund einer inhomogenen Temperaturverteilung relativ zu ihrer Umgebung eine höhere Temperatur aufweisen, welche die Zündung auslösen kann.

Ferner ist es zur Reduzierung von Schadstoffemissionen allgemein bekannt, Abgas von einer Abgasanlage der Brennkraftmaschine in die Frischluftanlage zurückzuführen. Wichtig ist dabei eine intensive Durchmischung zwischen Frischluft und rückgeführtem Abgas bevor das Frischluft-Abgas-Gemisch in den jeweiligen Brennraum gelangt.

Aus der WO 2008/095658 A1 ist eine Brennkraftmaschine bekannt, umfassend einen Kolbenmotor, der mindestens einen Brennraum aufweist, und eine Frischluftanlage zum Zuführen von Frischluft zum wenigstens einen Brennraum, die mindestens eine Frischluftleitung aufweist, wobei in der Frischluftleitung ein Blütenmischer angeordnet ist, der eine im Betrieb der Brennkraftmaschine in der Frischluftleitung geführte Frischluftströmung anströmseitig in zumindest zwei Teilströme unterteilt und abströmseitig unter Ausbildung einer Verwirbelung wieder vereint. Der Blütenmischer weist einen Blechkörper auf, der eine Anströmseite und eine Abströmseite mit einer Blütenstruktur aufweist und der die Frischluftleitung von einer Anströmkante des Blechkörpers bis zu einer Abströmkante des Blechkörpers in zwei parallel durchströmbare Leitungsabschnitte unterteilt, wobei eine Einleitstelle, über die eine Rückführleitung einer Abgasrückführanlage der Brennkraftmaschine an die Frischluftleitung angeschlossen ist, zum Rückführen von Abgas in die Frischluft stromauf des Blütenmischers oder im Bereich des Blütenmischers angeordnet ist.

Eine Brennkraftmaschine mit einem ringförmigen Blütenmischer ist aus der WO 02/055866 A1 bekannt.

Bei der FR 2 847 947 A1 ist in einer Frischluftleitung eine Drosselklappe stromab eines Strömungsleitkörpers angeordnet, der in der Frischluftleitung wischen einem oberen Leitungsabschnitt und einem unteren Leitungsabschnitt angeordnet ist. Mit Hilfe der Drosselklappe kann die Durchströmung der Frischluftleitung mit Frischluft mehr oder weniger gedrosselt werden, wodurch die Zuströmung von Frischluft zu den beiden Leitungsabschnitten beiderseits des Strömungsleitkörpers gleichermaßen mehr oder weniger behindert wird.

Die vorliegende Erfindung beschäftigt sich mit dem Problem, für eine Brennkraftmaschine der eingangs genannten Art bzw. für eine zugehörige Frischluftanlage eine verbesserte Ausführungsform anzugeben, die sich insbesondere dadurch auszeichnet, dass die Gefahr einer Vorentflammung reduziert ist beziehungsweise dass sich eine verbesserte Durchmischung zwischen der zugeführten Frischluft und rückgeführtem Abgas ergibt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, in der Frischluftleitung, also stromauf wenigstens eines Brennraums, einen Blütenmischer anzuordnen. Ein derartiger Blütenmischer kann im Betrieb der Brennkraftmaschine eine in der Frischluftleitung geführte Frischluftströmung anströmseitig in zumindest zwei Teilströme unterteilen und unter Ausbildung einer Verwirbelung abströmseitig wieder vereinen. Hierdurch kann eine intensive Durchmischung der beiden Teilströme realisiert werden. Dies kann im jeweiligen Brennraum zu einer Homogenisierung der Temperaturverteilung führen, was die Ausbildung von Hotspots abschwächt. Insoweit kann die Gefahr einer Vorentflammung reduziert werden. Im Falle einer Abgasrückführung, bei der insbesondere durch die Art der Einleitung des rückgeführten Abgases einer der Teilströme einen größeren Abgasanteil enthält oder ausschließlich aus dem rückgeführten Abgas besteht, sorgt der Blütenmischer für eine intensive Durchmischung von Frischluft und Abgas, wodurch ein weitgehend homogenisiertes Frischluft-Abgas-Gemisch erzeugt werden kann.

Blütenmischer sind bei Flugzeugtriebwerken bekannt, die mit zwei Gasströmen arbeiten. Hierzu wird an einem Austritt des Triebwerks eine zentrale Kemströmung mit einer koaxial dazu verlaufenden Mantelströmung mit Hilfe eines koaxial zwischen Kernströmung und Mantelströmung angeordneten, sich ringförmig erstreckenden Blütenmischers vermischt. Dabei sind bei einem solchen Zweistrom-Flugzeugtriebwerk die Kernströmung und die Mantelströmung von Anfang an getrennt geführt, so dass über den Ring-Blütenmischer lediglich die Vereinigung der beiden Strömungen am Triebwerksaustritt erfolgt.

Entsprechend der Erfindung weist der hier in der Frischluftanlage verwendete Blütenmischer einen Blechkörper auf, der eine Abströmseite mit einer Blütenstruktur und eine Anströmseite aufweist und der die Frischluftleitung von einer Anströmkante des Blechkörpers bis zu einer Abströmkante des Blechkörpers in zwei parallel durchströmbare Leitungsabschnitte unterteilt. Durch diese Bauweise besitzt der Blütenmischer einen vergleichsweise kleinen Strömungswiderstand, was für die Leistungsfähigkeit der Frischluftanlage bzw. der Brennkraftmaschine vorteilhaft ist.

Die Blütenstruktur kann entsprechend einer Weiterbildung mehrere Wellen aufweisen, die quer zur Durchströmungsrichtung der Frischluftleitung nebeneinander angeordnet sind. Im Vergleich zu einem im Abgasstrom eines Flugzeugtriebwerks angeordneten Ring-Blütenmischer besitzt der hier für eine Verwendung in der Frischluftanlage vorgestellte Blütenmischer eine ebene oder abgewickelte Struktur, bei der die Wellen der Blütenstruktur geradlinig nebeneinander angeordnet sind und nicht entlang eines Rings. Diese Bauweise führt zu einer extrem preiswerten Konstruktion, die außerdem vergleichsweise einfach montierbar ist und eine hinreichende Durchmischung realisiert. Alternativ ist auch eine Ausführungsform denkbar, bei welcher der Blütenmischer ringförmig ausgestaltet ist. Die Wellen der Wellenstruktur sind dann in Umfangsrichtung zueinander benachbart angeordnet. Die ankommende Strömung wird dann koaxial geteilt, also in zwei konzentrische Teilströme unterteilt.

Gemäß einer anderen vorteilhaften Ausführungsform kann der Blechkörper des Blütenmischers mittels einer Stelleinrichtung hinsichtlich seiner Relativlage zur Frischluftleitung verstellt werden. Hierdurch ist es im Betrieb der Brennkraftmaschine möglich, die Wirkung des Blütenmischers zu verändern, beispielsweise um die Wirkung des Blütenmischers an unterschiedliche Betriebspunkte der Brennkraftmaschine anzupassen.

Entsprechend der Erfindung ist eine Einleitstelle, über die eine Rückführleitung einer Abgasrückführanlage der Brennkraftmaschine an die Frischluftleitung angeschlossen ist, zum Rückführen von Abgas in die Frischluftleitung relativ zum Blütenmischer so positioniert, dass das rückgeführte Abgas nur in einen der Leitungsabschnitte einströmt, die durch den Blechkörper des Blütenmischers in der Frischluftleitung voneinander getrennt sind. Somit befindet sich nur an einer Seite des Blechkörpers, also in dem einen Leitungsabschnitt, rückgeführtes Abgas bzw. ein Abgas-Frischluft-Gemisch, während an der anderen Seite des Blechkörpers, also im anderen Leitungsabschnitt nur Frischluft strömt. Der Blütenmischer sorgt dann für eine intensive Durchmischung der beiden Teilströme und erzeugt stromab ein homogenisiertes Frischluft-Abgas-Gemisch.

Erfindungsgemäß ist in der Frischluftleitung stromauf der Einleitstelle ein Strömungsleitelement angeordnet sein, das verstellbar ist, um die Zuströmung von Frischluft zu einem der Leitungsabschnitte abhängig von der Stellung des Strömungsleitelements mehr oder weniger zu behindern. Beispielsweise kann das Strömungsleitelement um eine Achse verschwenkbar sein, die sich quer zur Durchströmungsrichtung und parallel zu einer Trennebene erstreckt, in welcher der Blechkörper die beiden Leitungsabschnitte voneinander trennt. In diesem Fall behindert das Strömungsleitelement die Zuströmung von Frischluft zu einem der Leitungsabschnitte abhängig von seiner Schwenkstellung mehr oder weniger. Mit Hilfe eines derartigen verstellbaren und insbesondere verschwenkbaren Strömungsleitelements kann der Druck in dem der Einleitstelle zugeordneten Leitungsabschnitt beeinflusst werden. Hierdurch ergibt sich eine Möglichkeit, die Menge des rückgeführten Abgases zu steuern, also die Abgasrückführrate einzustellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Prinzipdarstellung einer Brennkraftmaschine,
- Fig. 2: eine stark vereinfachte Detailansicht der Brennkraftmaschine im Bereich eines Brennraums,
- Fig. 3: eine perspektivische Ansicht eines Abschnitts einer Frischluftleitung mit darin angeordnetem Blütenmischer,
- Fig. 4: eine perspektivische Ansicht des Blütenmischers,
- Fig. 5: eine perspektivische Ansicht des Blütenmischers bei einer anderen Ausführungsform,
- Fig. 6: eine perspektivische Ansicht des Blütenmischers bei einer weiteren Ausführungsform,
- Fig. 7: ein Querschnittsprofil des Blütenmischers aus Fig. 4,
- Fig. 8: eine stark vereinfachte Seitenansicht des Abschnitts der Frischluftleitung mit darin angeordnetem Blütenmischer,
- Fig. 9: eine Ansicht wie in Fig. 3, jedoch bei einer anderen Ausführungsform,
- Fig. 10: eine Seitenansicht wie in Fig. 8, jedoch bei der in Fig. 9 gezeigten Ausführungsform,
- Fig. 11 und 12: Ansichten wie in Fig. 10, jedoch weiterer Ausführungsformen.

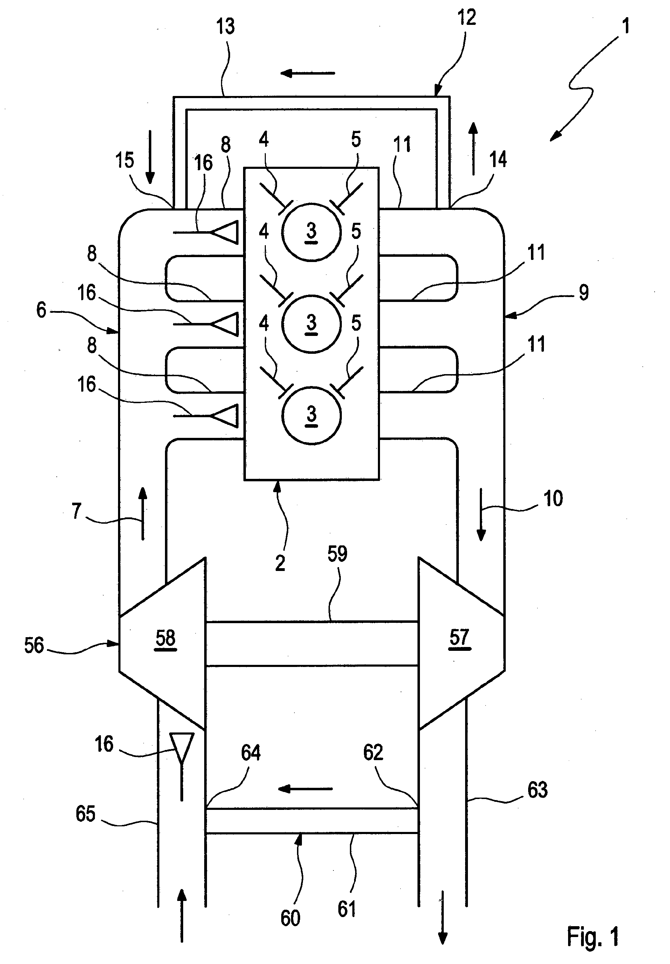

Entsprechend Fig. 1 umfasst eine Brennkraftmaschine 1, die insbesondere in einem Kraftfahrzeug angeordnet sein kann, einen Kolbenmotor 2, bei dem es sich um einen Ottomotor oder um einen Dieselmotor handeln kann, wobei jeweils eine Direkteinspritzung von Kraftstoff vorgesehen sein kann. Der Kolbenmotor 2 weist zumindest einen Brennraum 3 auf. Im Beispiel sind ohne Beschränkung der Allgemeinheit drei Brennräume 3 dargestellt. Zum Steuern von Ladungswechselvorgängen ist der Kolbenmotor 2 in üblicher Weise mit Ladungswechselventilen, nämlich mit Einlassventilen 4 und Auslassventilen 5 ausgestattet.

Die Brennkraftmaschine 1 weist außerdem eine Friscbluftanlage 6 auf, über die Frischluft entsprechend einem Pfeil 7 zu den Brennräumen 3 gelangt. Hierzu weist die Frischluftanlage je Brennraum 3 zumindest eine Frischluftleitung 8 auf. Im Beispiel sind daher drei Frischluftleitungen 8 vorgesehen.

Die Brennkraftmaschine 1 weist ferner eine Abgasanlage 9 auf, die entsprechend einem Pfeil 10 Abgas von den Brennräumen 3 wegführt. Im Beispiel weist die Abgasanlage 9 hierzu drei Abgasleitungen 11 auf.

Bei einem aufgeladenen Kolbenmotor 2 kann außerdem eine Ladeeinrichtung 56 vorgesehen sein, um das Druckniveau auf der Frischluftseite zu erhöhen. Im Beispiel der Fig. 1 ist die Ladeeinrichtung als Abgasturbolader 56 ausgestaltet, dessen Turbine 57 in die Abgasanlage 9 eingebunden ist und dessen Verdichter 58 in die Frischluftanlage 6 eingebunden ist. In üblicher Weise können dabei ein Turbinenrad der Turbine 57 und ein Verdichterrad des Verdichters 58 über eine gemeinsame Welle 59 miteinander verbunden sein.

Des Weiteren kann die Brennkraftmaschine 1 mit einer Abgasrückführanlage 12 bzw. 60 ausgestattet sein, mit deren Hilfe Abgas von der Abgasanlage 9 zur Frischluftanlage 6 rückgeführt werden kann. Bei einem aufgeladenen Kolbenmotor 2 kann die Abgasrückführung hochdruckseitig, also mit einer stromauf der Turbine 57 erfolgenden Entnahme und einer stromab des Verdichters 58 erfolgenden Einleitung, oder niederdruckseitig, also mit einer stromab der Turbine 57 erfolgenden Entnahme und einer stromauf des Verdichters erfolgenden Einleitung, realisiert werden. Im Beispiel der Fig. 1 sind zur Veranschaulichung sowohl eine Hochdruck-AGR-Anlage 12 als auch eine Niederdruck-AGR-Anlage 60 dargestellt. Die HD-AGR-Anlage 12 weist zumindest eine Rückführleitung 13 auf. Diese ist über eine stromauf der Turbine 57 angeordnete Entnahmestelle 14 an die Abgasanlage 9 bzw. an eine Abgasleitung 11 und über eine stromab des Verdichters 58 angeordnete Einleitstelle 15 an die Frischluftanlage 6 bzw. an eine der Frischluftleitungen 8 angeschlossen. Zweckmäßig kann jeder Frischluftleitung 8 eine eigene Rückführleitung 13, jedoch zumindest eine eigene Einleitstelle 15 zugeordnet sein. Hierdurch ist für jeden Zylinder bzw. für jeden Brennraum 3 eine individuelle Abgasrückführung möglich. Im Unterschied dazu weist die ND-AGR-Anlage 60 zumindest eine Rückführleitung 61 auf. Diese ist über eine stromab der Turbine 57 angeordnete Entnahmestelle 62 an die Abgasanlage 9 bzw. an eine Abgasleitung 63 und über eine stromauf des Verdichters 58 angeordnete Einleitstelle 64 an die Frischluftanlage 6 bzw. an eine Frischluftleitung 65 angeschlossen. Zweckmäßig ist dann nur eine einzige Rückführleitung 61 vorgesehen. Hierdurch wird für alle Zylinder bzw. für alle Brennräume 3 eine gemeinsame oder kollektive Abgasrückführung realisiert. Außerdem ist auch eine hier nicht dargestellte AGR-Anlage realisierbar, bei welcher das rückzuführende Abgas hochdruckseitig, also stromauf der Turbine 57 entnommen und niederdruckseitig, also stromauf des Verdichters 58 eingeleitet wird.

In der jeweiligen Frischluftleitung 8 ist ein Blütenmischer 16 angeordnet. Im Beispiel ist in jeder Frischluftleitung 8 jeweils ein Blütenmischer 16 angeordnet. Der jeweilige Blütenmischer 16 befindet sich dabei stromauf der Einlassventile 4. Im gezeigten Beispiel gehört er zum Bauumfang der Frischluftanlage 6. Bei einer anderen Ausführungsform kann er jedoch in einem im Kolbenmotor 2 angeordneten Abschnitt der jeweiligen Frischluftleitung 8 angeordnet sein und insoweit zum Bauumfang des Kolbenmotors 2 gehören. Sofern eine ND-AGR-Anlage 60 vorgesehen ist, kann auch stromauf - oder alternativ stromab - des Verdichters 58 ein solcher Blütenmischer 16 vorgesehen sein.

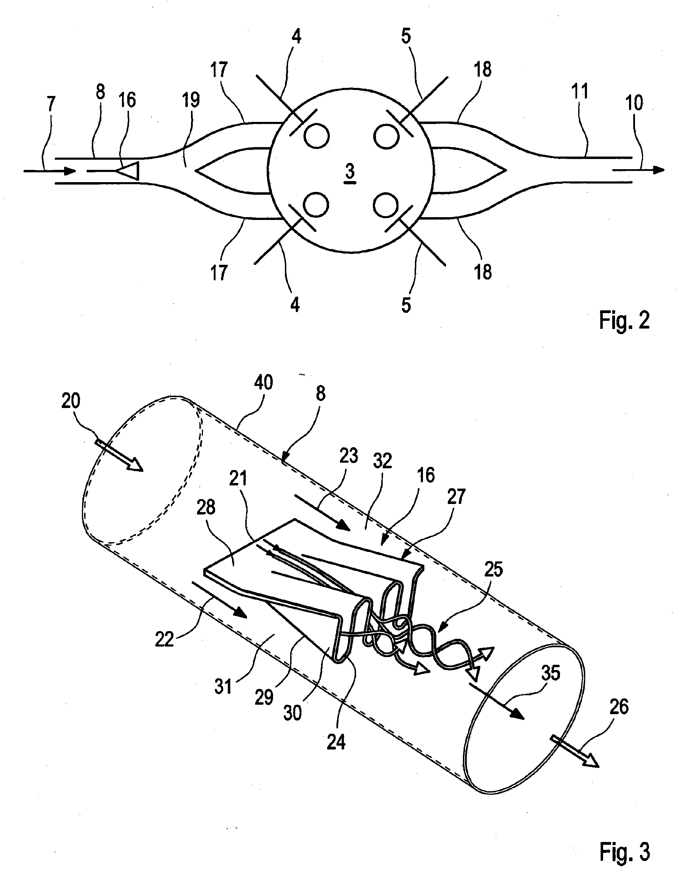

Entsprechend Fig. 2 kann die jeweilige Frischluftleitung 8, insbesondere inner-halb des Kolbenmotors 2, in zumindest zwei Endabschnitte 17 aufzweigen. Jeder Endabschnitt 17 ist über jeweils ein Einlassventil 4 an einen der Brennräume 3 angeschlossen. Diese Endabschnitte 17 können daher innerhalb des Kolbenmotors 2 angeordnet sein. Im Beispiel der Fig. 2 ist die Abgasleitung 11 entsprechend aufgebaut und mit zwei Anfangsabschnitten 18 ausgestattet, die über je ein Auslassventil 5 an dem Brennraum 3 angeschlossen sind, wobei der jeweilige Anfangsabschnitt 18 insbesondere innerhalb des Kolbenmotors 2 angeordnet sein kann. Der Blütenmischer 16 ist bei einer derartigen Konfiguration der Frischluftleitung 8 stromauf der mit 19 bezeichneten Aufzweigstelle angeordnet, bei der die Frischluftleitung 8 in die zwei Endabschnitte 17 aufzweigt.

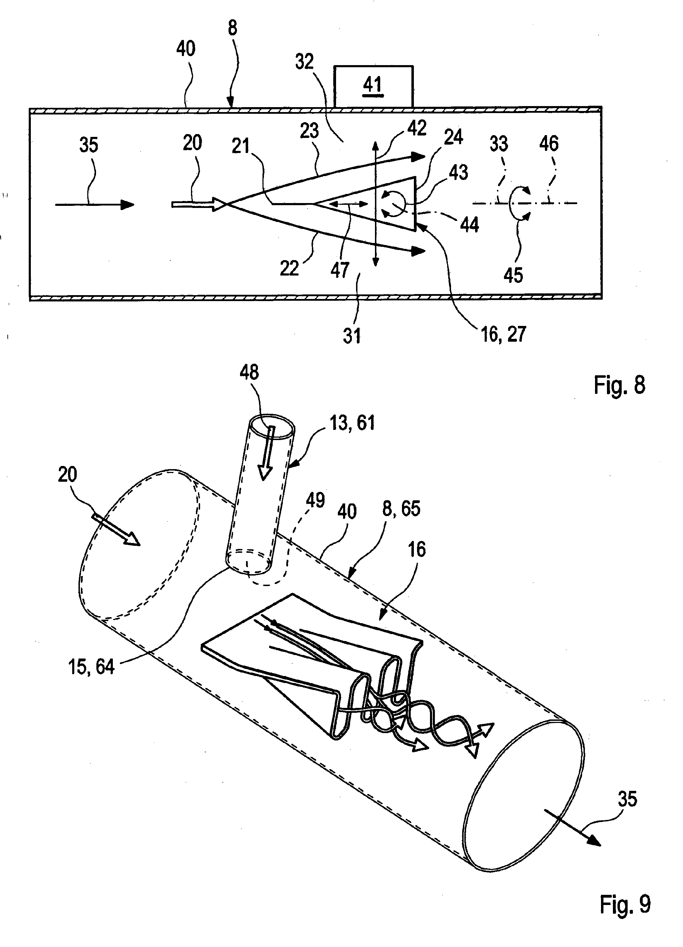

In den Fig. 1 und 2 ist zur vereinfachten Darstellung des Blütenmischers 16 symbolisch eine vereinfachte Seitenansicht des Blütenmischers 16 wiedergegeben, wie sie sich auch in den Fig. 8 und 10 bis 12 findet. Diese Seitenansicht ist jedoch in den Fig. 1 und 2 gegenüber der tatsächlichen Einbaulage mit Bezug auf die Brennräume 3 um 90° gedreht, und zwar um eine in der Zeichnungsebene und parallel zur Strömungsrichtung verlaufende Drehachse.

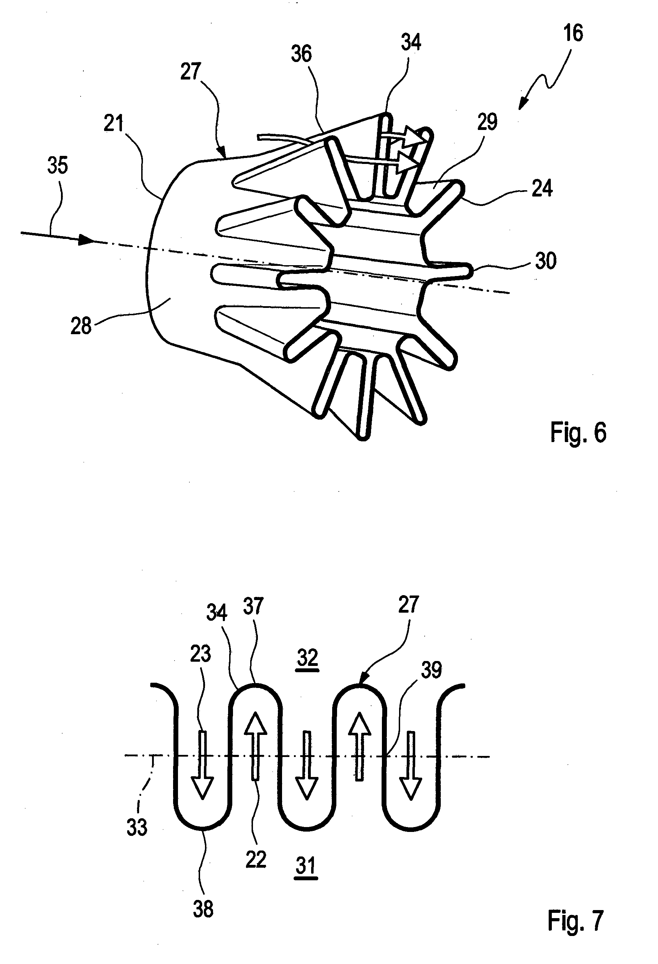

Entsprechend den Fig. 3 bis 12 ist der Blütenmischer 16 so ausgestaltet und in der jeweiligen Frischluftleitung 8 so angeordnet, dass er im Betrieb der Brennkraftmaschine 1 eine in der Frischluftleitung 8 geführte Frischluftströmung 20 anströmseitig, also an einer Anströmkante 21 in zumindest zwei Teilströme 22, 23 unterteilt und diese abströmseitig, also an einer Abströmkante 24 unter Ausbildung einer Verwirbelung 25 wieder zu einer Frischluftströmung 26 vereint, die sich aufgrund der Verwirbelung 25 stromab des Blütenmischers 16 homogenisiert. Hierzu ist der Blütenmischer 16 entsprechend den hier gezeigten, bevorzugten Ausführungsformen mit einem Blechkörper 27 ausgestattet. Dieser besitzt eine Anströmseite 28, welche die Anströmkante 21 aufweist, sowie eine Abströmseite 29, welche die Abströmkante 24 und eine Blütenstruktur 30 aufweist. Der Blechkörper 27 unterteilt die Frischluftleitung 8 von der Anströmkante 21 bis zur Abströmkante 24 in zwei Leitungsabschnitte 31, 32, die parallel durchströmbar sind, nämlich von den Teilströmen 22, 23. Der Blechkörper 27 definiert dabei eine in Fig. 7 angedeutete Trennebene 33, in welcher der Blechkörper 27 die beiden Leitungsabschnitte 31, 32 voneinander trennt.

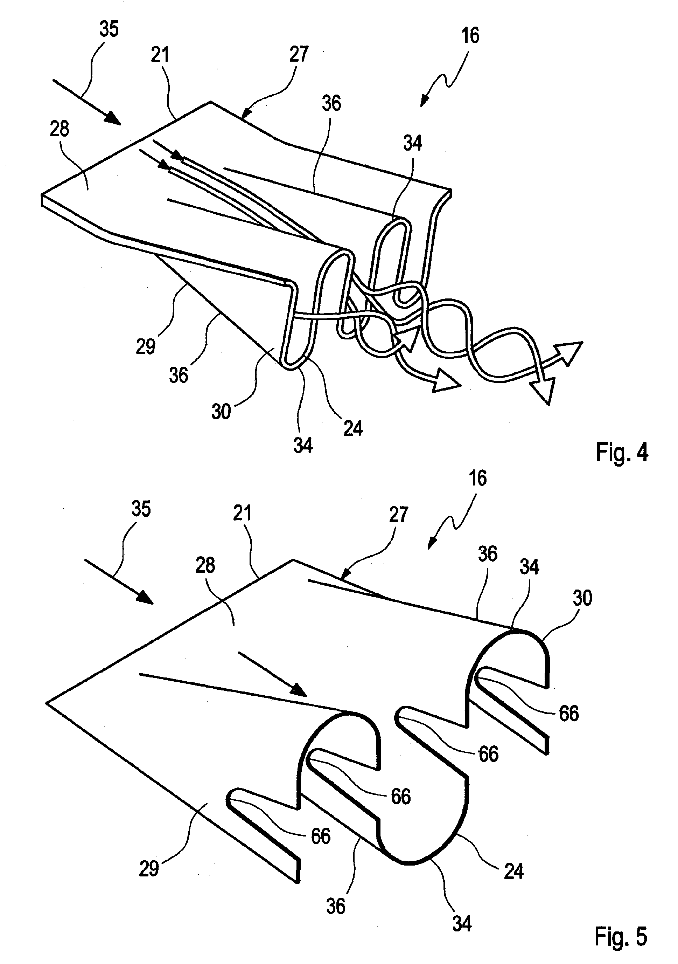

Wie insbesondere den Fig. 4 bis 7 entnehmbar ist, weist die Blütenstruktur 30 mehrere Wellen 34 auf, welche die "Blüten" der Blütenstruktur 30 bzw. des Blütenmischers 16 bilden. Die Wellen 34 sind bei den Ausführungsformen der Fig. 4, 5 und 7 quer zu einer Durchströmungsrichtung 35 der Frischluftleitung 8 nebeneinander angeordnet. Insoweit handelt es sich beim Blütenmischer 16 um einen ebenen oder abgewickelten Blütenmischer 16.

Im Unterschied dazu zeigt Fig. 6 einen ringförmigen Blütenmischer 16, bei dem die Wellen 34 bezogen auf die Durchströmungsrichtung 35 in der Umfangsrichtung nebeneinander angeordnet sind. Bei dieser Ausführungsform kommt es bei der Durchströmung des Blütenmischers 16 zu einer koaxialen Aufteilung der ankommenden Abgasströmung 20. In der Folge strömen die Teilströme 22 und 23 dann konzentrisch zueinander und werden am Austritt des Blütenmischers 16 wieder zusammengeführt und durch die Verwirbelung 25 intensiv durchmischt. Bei den hier gezeigten Blütenstrukturen 30 wachsen die Wellen 34 hinsichtlich ihrer Amplituden in der Durchströmungsrichtung 35 an. Im Beispiel wachsen sie dabei gleichmäßig, nämlich linear an. Außerdem sind sie parallel zueinander ausgerichtet. Insoweit ergeben sich für die Wellen 34 geradlinige Scheitellinien 36, die auf die Anströmseite 28 des Blechkörpers 27 zulaufen bzw. von diesem ausgehen.

Die Wellen 34 weisen hier runde, insbesondere halbkreisförmige, Wellenberge 37 und Wellentäler 38 auf. Ferner sind im Beispiel zwischen benachbarten Wellenbergen 37 und Wellentälern 38 geradlinige Übergangsabschnitte 39 vorgesehen. Dabei können sich die einzelnen Übergangsabschnitte 39 parallel zueinander erstrecken.

Die einzelnen Wellen 34 beginnen zweckmäßig an einem von der Anströmkante 21 beabstandeten Ende der Anströmseite 28 und definieren dadurch den Übergang zur Abströmseite 29. Vorteilhaft sind die Wellen 34 bezüglich der Trennebene 33 spiegelsymmetrisch gestaltet. Bei den hier gezeigten Ausführungsformen sind die Wellen 34 gleich ausgestaltet. Es ist jedoch möglich, die Wellen 34 mit unterschiedlichen Amplituden auszustatten. Insbesondere können die bezüglich einer Wand 40 der Frischluftleitung 8 proximal angeordneten Wellen 34 kleinere Amplituden aufweisen als die bezüglich der Wand 40 distal angeordneten Wellen 34.

In den Beispielen der Fig. 4 und 5 ist die Anströmkante 21 geradlinig ausgestaltet. Ferner erstreckt sie sich quer zur Durchströmungsrichtung 35. Zweckmäßig ist die Anströmseite 28 eben ausgestaltet, also durch einen ebenen Abschnitt des Blechkörpers 27 gebildet. Im Beispiel der Fig. 6 liegen die Anströmkante 21 und die Abströmkante 24 jeweils in einer Ebene, die sich quer zur Durchströmungsrichtung 35 erstrecken. Außerdem ist die Anströmkante 21 hier ringförmig ausgestaltet.

Der Blechkörper 27, der den Blütenmischer 16 bildet, kann als einteiliges Blechformteil konzipiert sein. Dieses Blechformteil kann aus einem einzigen Blechteil durch Umformung hergestellt sein, um den Blechkörper 27 zu bilden. Alternativ ist es ebenso möglich, den Blütenmischer 16 durch Lasersintem oder als Gussteil herzustellen.

Die hier beschriebene Form des Blütenmischers 16 ist zwar bevorzugt, schließt jedoch andere Formen nicht aus. Insbesondere können die Wellen 34 auch andere Formen besitzen.

Die Abströmkante 24 ist hier wellenförmig ausgestaltet und liegt in einer Ebene, die sich quer zur Durchströmungsrichtung 35 erstreckt. Es ist klar, dass sich für die Ausgestaltung der Abströmkante 24 auch andere Konfigurationen eignen können, beispielsweise um die Durchmischung bzw. Verwirbelung 25 zu verbessern und/oder um den Strömungswiderstand des Blütenmischers 16 zu reduzieren. Dementsprechend zeigt Fig. 5 rein exemplarisch eine Ausführungsform, bei welcher die Wellen 34 an der Abströmkante 24 Einschnitte 66 aufweisen. Diese Einschnitte 66 erstrecken von der Abströmkante 24 entgegen der Durchströmungsrichtung 35 und können z.B. keilförmig sein. Das Anbringen derartiger Einschnitte 66 wird auch als Scalloping bezeichnet.

Entsprechend den Fig. 8 und 10 bis 12 kann der Blechkörper 27 bzw. der Blütenmischer 16 mit Hilfe einer Stelleinrichtung 41 hinsichtlich einer Relativlage zwischen Frischluftleitung 8 und Blütenmischer 16 bzw. zwischen Frischluftleitung 8 und Blechkörper 27 verstellt werden. Hierzu ist die Stelleinrichtung 41 auf entsprechende Weise mit dem Blütenmischer 16 bzw. mit dem Blechkörper 27 gekoppelt. Die Stelleinrichtung 41 kann beispielsweise elektromotorisch oder pneumatisch oder hydraulisch oder durch eine Kombination davon arbeiten. Entsprechend einer vorteilhaften Ausführungsform kann die Stelleinrichtung 41 so ausgestaltet sein, dass sie eine durch einen Doppelpfeil angedeutete Querverstellung 42 des Blechkörpers 27 in der Frischluftleitung 8 ermöglicht, die sich quer zur Trennebene 33 erstreckt. Zusätzlich oder alternativ kann die Stelleinrichtung 41 so ausgestaltet sein, dass sie eine durch einen Drehrichtungsdoppelpfeil angedeutete Schwenkverstellung 43 des Blechkörpers 27 um eine Schwenkachse 44 ermöglicht, die in der Trennebene 33 liegt und die sich quer zur Durchströmungsrichtung 35 erstreckt. Zusätzlich oder alternativ kann die Stelleinrichtung 41 so ausgestaltet sein, dass sie eine durch einen Drehdoppelpfeil angedeutete Drehverstellung 45 des Blechkörpers 27 um eine Drehachse 46 ermöglicht, die sich parallel zur Durchströmungsrichtung 35 erstreckt und die im Beispiel in der Trennebene liegt. Zusätzlich oder alternativ kann die Stelleinrichtung 41 so ausgestaltet sein, dass sie eine durch einen Doppelpfeil angedeutete Längsverstellung 47 des Blechkörpers 27 parallel zur Durchströmungsrichtung 35 ermöglicht.

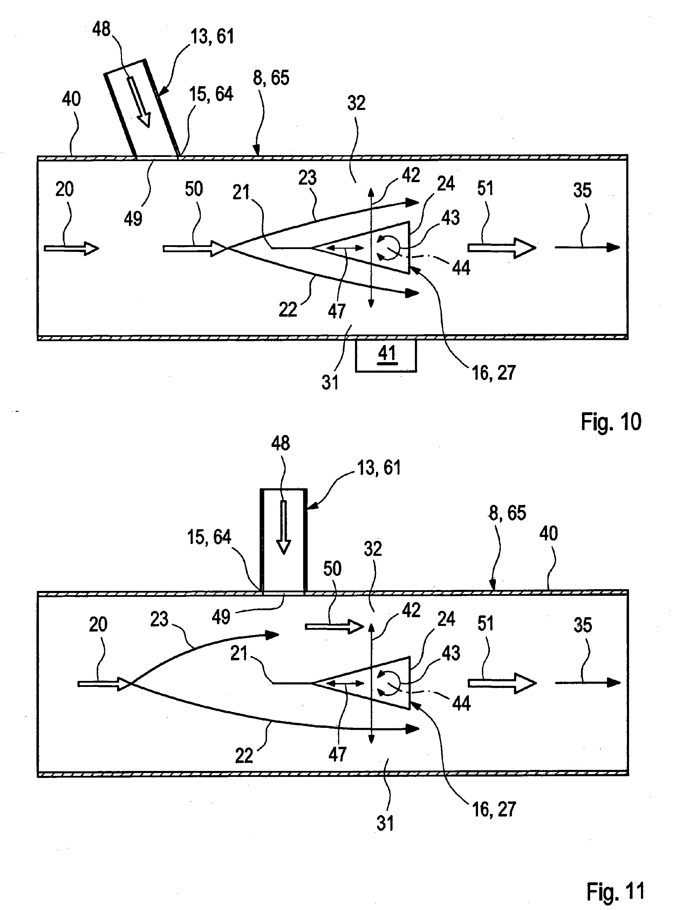

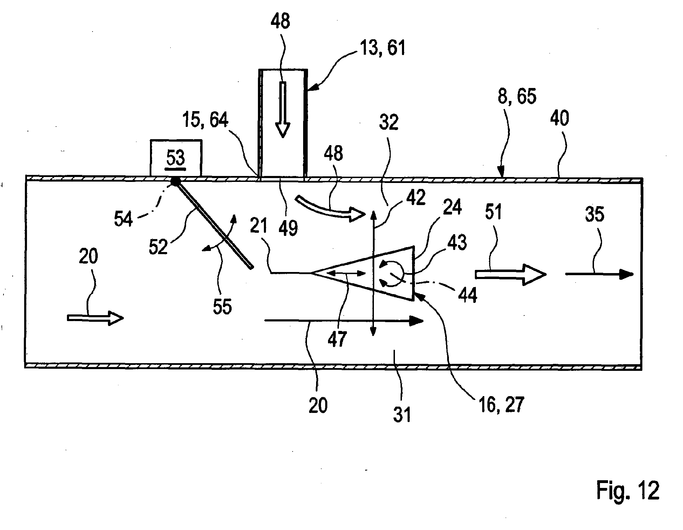

Bei den Fig. 9 bis 12 ist die jeweilige Einleitstelle 15, 64, über die die Rückführleitung 13, 61 an die Frischluftleitung 8, 65 angeschlossen ist und über die das rückgeführte Abgas entsprechend einem Pfeil 48 in den Frischluftstrom 20 der Frischluftleitung 8, 65 einleitbar ist, im Bereich des Blütenmischers 16 angeordnet. Die Fig. 9 und 10 zeigen dabei eine Ausführungsform, bei welcher sich die Einleitstelle 15, 64 stromauf des Blütenmischers 16 befindet. Im Unterschied dazu zeigen die Fig. 11 und 12 je eine Ausführungsform, bei welcher die Einleitstelle 15, 64 zwischen der Anströmkante 21 und der Abströmkante 24 des Blütenmischers 16 angeordnet ist. In beiden Fällen ist die Einleitstelle 15, 64 durch eine radiale Öffnung 49 gebildet, die in die Wand 40 der Frischluftleitung 8, 65 eingebracht ist. Grundsätzlich ist jedoch auch eine andere, hier nicht gezeigte Ausführungsform denkbar, bei welcher die jeweilige Einleitstelle 15, 64 durch eine axiale Öffnung gebildet ist, die in der Durchströmungsrichtung 35 geöffnet ist. Diese axiale Öffnung befindet sich dann an einem offenen Ende eines Einleitrohrs, das durch die Wand 40 in die Frischluftleitung 8, 65 hineinragt.

In den Beispielen der Fig. 9, 11 und 12 erfolgt die Einleitung des rückgeführten Abgases 48 im Wesentlichen senkrecht zur Frischgasströmung 20. Grundsätzlich sind jedoch auch andere Winkel zwischen dem eingeleitetem Abgas 48 und der Frischluft 20 realisierbar. Beispielsweise zeigt Fig. 10 stellvertretend für alle Varianten eine Konfiguration, bei welcher zwischen dem eingeleiteten Abgas 48 und der Frischluft 20 ein in der Durchströmungsrichtung 35 orientierter stumpfer Winkel vorliegt. Ebenso ist auch ein entgegen der Durchströmungsrichtung 35 orientierter stumpfer Winkel möglich. Ferner sind auch für die Wandöffnung 49 grundsätzlich beliebige Geometrien denkbar, z.B. rund, eckig, kreisförmig, oval, elliptisch, schlitzförmig, etc., wobei längliche Öffnungen 49 gegebenenfalls eine Orientierung parallel oder quer zur Durchströmungsrichtung 35 aufweisen können.

In Fig. 10 erfolgt somit die Einleitung von rückgeführtem Abgas 48 zur Frischluftströmung 20, wodurch sich eine schlecht vermischte Gemischströmung 50 bildet. Der Blütenmischer 16 erzeugt dann eine gut durchmischte, insbesondere homogenisierte Gemischströmung 51.

Bei den Ausführungsformen der Fig. 11 und 12 ist die Einleitstelle 15 relativ zum Blütenmischer 16 so positioniert, dass das rückgeführte Abgas 48 im Wesentlichen nur in den einen Leitungsabschnitt 32 einströmt. Das rückgeführte Abgas 48 strömt dabei in den der Einleitstelle 15 zugewandten Leitungsabschnitt 32 ein. Auf diese Weise wird im Wesentlichen nur der durch diesen Leitungsabschnitt 32 geführte Teilstrom 23 mit dem rückgeführten Abgas 48 vermischt. Durch den Blütenmischer 16 erfolgt dann die Verwirbelung und intensive Durchmischung des Frischluft-Abgas-Gemischs.

Gemäß Fig. 11 wird das rückgeführte Abgas 48 somit der Teilströmung 23 zugeführt, wodurch wieder die schlecht durchmischte Gemischströmung 50 entsteht. Stromab des Blütenmischers 16 liegt dann wieder die gut durchmischte bzw. homogenisierte Gemischströmung 51 vor.

Fig. 12 zeigt eine Ausführungsform, bei welcher in der Frischluftleitung 8 stromauf der Einleitstelle 15 ein Strömungsleitelement 52 angeordnet ist. Dieses ist im Beispiel durch eine Klappe gebildet. Ferner ist ein Stellantrieb 53 vorgesehen, mit dessen Hilfe das Strömungsleitelement 52 verstellbar ist. Im gezeigten Beispiel ist das Strömungsleitelement 52 um eine Achse 54 verschwenkbar, die sich quer zur Durchströmungsrichtung 35 und parallel zur Trennebene 33 erstreckt. Je nach eingestellter Position des Strömungsleitelements 52 ergibt sich für die Zuströmung von Frischluft zu dem Leitungsabschnitt 32, der der Einleitstelle 15 zugewandt ist, eine mehr oder weniger starke Behinderung. Die Verstellbarkeit des Strömungsleitelements 52 ist in Fig. 12 durch einen Doppelpfeil 55 angedeutet. Eingestellt ist in Fig. 12 eine Position für das Strömungsleitelement 52, in der eine relativ starke Behinderung der Zuströmung von Frischluft zu besagtem Leitungsabschnitt 32 vorliegt. Im Extremfall kann das Strömungsleitelement 52 entsprechend einer vorteilhaften Ausführungsform in eine Sperrstellung verschwenkt werden, in der die Zuströmung von Frischluft zu besagtem Leitungsabschnitt 32 mehr oder weniger gesperrt ist. In diesem Fall strömt dann die Frischluftströmung 20 im Wesentlichen vollständig durch den von der Einleitstelle 15 abgewandten Leitungsabschnitt 31, während in dem der Einleitstelle 15 zugewandten Leitungsabschnitt 32 im Wesentlichen ausschließlich die rückgeführte Abgasströmung 48 strömt. Stromab des Blütenmischers 16 liegt dann wieder die homogenisierte bzw. gut durchmischte Gemischströmung 51 vor.

Im Beispiel der Fig. 12 ist das Strömungsleitelement 52 mit der Ausführungsform der Fig. 11 kombiniert; ebenso ist es möglich, das Strömungsleitelement 52 bei der in Fig. 8 oder in Fig. 10 gezeigten Ausführungsform anzuwenden. In den Beispielen der Fig. 3 und 8 bis 12 kommt jeweils der Blütenmischer 16 gemäß Fig. 4 und 7 zum Einsatz; ebenso könnten die Blütenmischer 16 der Fig. 5 und 6 zum Einsatz kommen.

## Patentansprüche

1. Frischluftanlage (6) zum Zuführen von Frischluft (7) zu wenigstens einem Brennraum (3) einer Brennkraftmaschine(1),
- wobei die Frischluftanlage (6) mindestens eine Frischluftleitung (8; 65) aufweist,
- wobei in der Frischluftleitung (8; 65) ein Blütenmischer (16) angeordnet ist, der eine im Betrieb der Brennkraftmaschine (1) in der Frischluftleitung (8; 65) geführte Frischluftströmung (20) anströmseitig in zumindest zwei Teilströme (21, 23) unterteilt und abströmseitig unter Ausbildung einer Verwirbelung (25) wieder vereint,
- wobei der Blütenmischer (16) einen Blechkörper (27) aufweist, der eine Anströmseite (28) und eine Abströmseite (29) mit einer Blütenstruktur (30) aufweist und der die Frischluftleitung (8; 65) von einer Anströmkante (21) des Blechkörpers (27) bis zu einer Abströmkante (24) des Blechkörpers (27) in zwei parallel durchströmbare Leitungsabschnitte (31, 32) unterteilt,
- wobei eine Einleitstelle (15; 64), über die eine Rückführleitung (13; 61) einer Abgasrückführanlage (12; 60) der Brennkraftmaschine (1) an die Frischluftleitung (8; 65) anschließbar ist, zum Rückführen von Abgas (48) in die Frischluft (20) stromauf des Blütenmischers (16) oder im Bereich des Blütenmischers (16) angeordnet ist,
**dadurch gekennzeichnet,**
- **dass** die Einleitstelle (15; 64) relativ zum Blütenmischer (16) so positioniert ist, dass das rückgeführte Abgas (48) nur in einen der Leitungsabschnitte (32) einströmt,
- **dass** in der Frischluftleitung (8; 65) stromauf der Einleitstelle (15; 64) ein Strömungsleitelement (52) angeordnet ist, das verstellbar ist, um die Zuströmung von Frischluft (20) zu einem der Leitungsabschnitte (32) abhängig von seiner Stellung mehr oder weniger zu behindern.

2. Frischluftanlage nach Anspruch 1,
**dadurch gekennzeichnet,**
**dass** die Blütenstruktur (30) mehrere Wellen (34) aufweist, die quer zur Durchströmungsrichtung (35) der Frischluftleitung (8; 65) nebeneinander angeordnet sind.

3. Frischluftanlage nach Anspruch 2,
**dadurch gekennzeichnet,**
- **dass** die Wellen (34) hinsichtlich ihrer Amplituden in der Durchströmungsrichtung (35) anwachsen, oder
- **dass** die Wellen (34) geradlinige Scheitellinien (36) aufweisen, oder
- **dass** die Wellen (34) runde, insbesondere halbkreisförmige, Wellenberge (37) und Wellentäler (38) aufweisen, zwischen denen sich geradlinige Übergangsabschnitte (39) erstrecken, die insbesondere parallel zueinander verlaufen können,oder
- **dass** die Wellen (34) an einem von der Abströmkante (21) beabstandeten Ende der Anströmseite (28) beginnen, oder
- **dass** die Wellen (34) bezüglich einer Trennebene (33), in welcher der Blechkörper (27) die beiden Leitungsabschnitte (31, 32) voneinander trennt, spiegelsymmetrisch gestaltet sind.

4. Frischluftanlage nach einem der Ansprüche 1 bis 3,
**dadurch gekennzeichnet,**
- **dass** die Abströmkante (21) geradlinig ausgestaltet ist, oder
- **dass** die Anströmseite (28) eben ausgestaltet ist.

5. Frischluftanlage nach Anspruch 4,
**dadurch gekennzeichnet,**
**dass** sich die Anströmkante (21) quer zur Durchströmungsrichtung (35) der Frischluftleitung (8; 65) erstreckt.

6. Frischluftanlage nach Anspruch 1,
**dadurch gekennzeichnet,**
**dass** die Blütenstruktur (30) mehrere Wellen (34) aufweist, die in der Umfangsrichtung der Frischluftleitung (8; 65) nebeneinander angeordnet sind.

7. Frischluftanlage nach einem der Ansprüche 1 bis 6,
**dadurch gekennzeichnet,**
**dass** der Blütenmischer (16) oder der Blechkörper (27) mittels einer Stelleinrichtung (41) hinsichtlich der Relativlage zur Frischluftleitung (8; 65) einstellbar ist.

8. Frischluftanlage nach Anspruch 7,
**dadurch gekennzeichnet,**
**dass** die Stelleinrichtung (41) eine Querverstellung (42) des Blechkörpers (27) in der Frischluftleitung (8; 65) quer zu einer Trennebene (33) ermöglicht, in welcher der Blechkörper (27) die beiden Leitungsabschnitte (31, 32) voneinander trennt.

9. Frischluftanlage nach Anspruch 7 oder 8,
**dadurch gekennzeichnet,**
**dass** die Stelleinrichtung (41) eine Drehverstellung (45) des Blechkörpers (27) um eine parallel zur Durchströmungsrichtung (35) verlaufende Drehachse (46) ermöglicht.

10. Frischluftanlage nach einem der Ansprüche 7 bis 9,
**dadurch gekennzeichnet,**
**dass** die Stelleinrichtung (41) eine Schwenkverstellung (43) des Blechkörpers (27) um eine quer zur Durchströmungsrichtung (35) verlaufende und in einer Trennebene (33), in welcher der Blechkörper (27) die beiden Leitungsabschnitte (31, 32) voneinander trennt, liegende Schwenkachse (44) ermöglicht.

11. Frischluftanlage nach einem der Ansprüche 7 bis 10,
**dadurch gekennzeichnet,**
**dass** die Stelleinrichtung (41) eine Längsverstellung (47) des Blechkörpers (27) parallel zur Durchströmungsrichtung (35) ermöglicht.

12. Frischluftanlage nach einem der Ansprüche 7 bis 11,
**dadurch gekennzeichnet,**
- **dass** die Einleitstelle (15; 64) durch eine radiale Öffnung (49) ausgebildet ist, die in einer Wand (40) der Frischluftleitung (8; 65) vorgesehen ist, oder
- **dass** die Einleitstelle (15; 64) durch eine axiale Öffnung ausgebildet ist, die sich an einem Ende eines Einleitrohrs befindet, das durch eine Wand (40) der Frischluftleitung (8; 65) in diese hineinragt.

13. Frischluftanlage nach einem der Ansprüche 1 bis 12,
**dadurch gekennzeichnet,**
**dass** das Strömungsleitelement (52) in eine Sperrstellung verschwenkbar ist, in der es die Zuströmung von Frischluft (20) zu dem einen Leitungsabschnitt (32) sperrt.

14. Frischluftanlage nach einem der Ansprüche 1 bis 13,
**dadurch gekennzeichnet,**
**dass** die Frischluftleitung (8; 65) in wenigstens zwei Endabschnitte (17) aufzweigt, die über je ein Einlassventil (4) an einen solchen Brennraum (3) angeschlossen sind, wobei der Blütenmischer (16) stromauf dieser Abzweigung (19) angeordnet ist.

15. Brennkraftmaschine (1), insbesondere eines Kraftfahrzeugs, mit einem Kolbenmotor (2), der mindestens einen Brennraum (3) aufweist, und mit einer Frischluftanlage (6) nach einem der Ansprüche 1 bis 14 zum Zuführen von Frischluft (7) zum wenigstens einen Brennraum (3).

## Claims

1. Fresh air system (6) for feeding fresh air (7) to at least one combustion chamber (3) of an internal combustion engine (1),
- wherein the fresh air system (6) comprises at least one fresh air line (8; 65)
- wherein in the fresh air line (8; 65) a bloom mixer (16) is arranged, which on the onflow side divides a fresh air flow (20) conducted in the fresh air line (8; 65) during the operation of the internal combustion engine (1) into at least two partial flows (21, 23) and reunites these again on the outflow side subject to the formation of a turbulence (25),
- wherein the bloom mixer (16) comprises a sheet-metal body (27) having an onflow side (28) and an outflow side (29) with a bloom structure (30) and which divides the fresh air line (8; 65) from an on-flow edge (21) of the sheet-metal body (27) to an out-flow edge (24) of the sheet-metal body (27) into two line sections (31, 32) that can be subjected to parallel throughflow,
- wherein an infeed point (15; 64), via which a recirculation line (13; 61) of an exhaust gas recirculation system (12; 60) of the internal combustion engine (1) is connectable to the fresh air line (8; 65) is arranged upstream of the bloom mixer (16) or in the region of the bloom mixer (16) for recirculating exhaust gas (48) into the fresh air (20),
**characterized**
- **in that** the infeed point (15; 64) is positioned relative to the bloom mixer (16) so that the recirculated exhaust gas (48) only flows into one of the line portions (32),
- **in that** in the fresh air line (8; 65) upstream of the infeed point (15; 64) a flow guiding element (52) is arranged which is adjustable in order to more or less obstruct the inflow of fresh air (20) to one of the line portions (32) dependent on its position.

2. The fresh air system according to Claim 1,
**characterized in that**
the bloom structure (30) comprises a plurality of waves (34) which are arranged next to one another transversely to the through-flow direction (35) of the fresh air line (8; 65).

3. The fresh air system according to Claim 2,
**characterized**
- **in that** the waves (34) with respect to their amplitudes grow in the through-flow direction (35), or
- **in that** the waves (34) have straight-line apex lines (36), or
- **in that** the waves (34) have round, in particular semi-circular wave crests (37) and wave troughs (38), between which straight-line transition portions (39) extend, which can in particular run parallel to one another, or
- **in that** the waves (34) start at an end of the onflow side (28) spaced from the on-flow edge (21), or
- **in that** the waves (34) with respect to a separating plane (33), in which the sheet-metal body (27) separates the two line portions (31, 32) from each other, are configured mirror-symmetrically.

4. The fresh air system according to any one of the Claims 1 to 3,
**characterized**
- **in that** the on-flow edge (21) is configured in a straight line, or
- **in that** the onflow side (28) is configured flat.

5. The fresh air system according to Claim 4,
**characterized in that**
the on-flow edge (21) extends transversely to the through-flow direction (35) of the fresh air line (8; 65) .

6. The fresh air system according to Claim 1,
**characterized in that**
the bloom structure (30) comprises a plurality of waves (34), which in the circumferential direction of the fresh air line (8; 65) are arranged next to one another.

7. The fresh air system according to any one of the Claims 1 to 6,
**characterized in that**
the bloom mixer (16) or the sheet-metal body (27) is adjustable with respect to the relative position to the fresh air line (8; 65) by means of an adjusting device (41).

8. The fresh air system according to Claim 7,
**characterized in that**
the adjusting device (41) makes possible a transverse adjustment 42 of the sheet-metal body (27) in the fresh air line (8; 65) transversely to a separating plane (33), in which the sheet-metal body (27) separates the two line portions (31, 32) from each other.

9. The fresh air system according to Claim 7 or 8,
**characterized in that**
the adjusting device (41) makes possible a rotational adjustment (45) of the sheet-metal body (27) about a rotational axis (46) running parallel to the through-flow direction (35).

10. The fresh air system according to any one of the Claims 7 to 9,
**characterized in that**
the adjusting device (41) makes possible a pivot adjustment (43) of the sheet-metal body (27) about a pivot axis (44) running transversely to the through-flow direction (35) and located in a separating plane (33), in which the sheet-metal body (27) separates the two line portions (31, 32) from each other.

11. The fresh air system according to any one of the Claims 7 to 10,
**characterized in that**
the adjusting device (41) makes possible a longitudinal adjustment (47) of the sheet-metal body (27) parallel to the through-flow direction (35).

12. The fresh air system according to any one of the Claims 7 to 11,
**characterized in that**
- the infeed point (15; 64) is formed by a radial opening (49) that is provided in a wall (40) of the fresh air line (8; 65), or
- the infeed point (15; 64) is formed by an axial opening that is located at an end of an infeed pipe which protrudes through a wall (40) of the fresh air line (8; 65) into the latter.

13. The fresh air system according to any one of the Claims 1 to 12,
**characterized in that**
the flow guiding element (52) can be pivoted into a blocking position, in which it blocks the inflow of fresh air (20) to the one line portion (32).

14. The fresh air system according to any one of the Claims 1 to 13,
**characterized in that**
the fresh air line (8; 65) branches out into at least two end portions (17), which are connected to such a combustion chamber (3) via an inlet valve (4) each, wherein the bloom mixer (16) is arranged upstream of this branch-off (19).

15. An internal combustion engine (1), in particular of a motor vehicle, with a piston engine (2) having at least one combustion engine (2) having at least one combustion chamber (3), and a fresh air system (6) according to any one of the Claims 1 to 14 for feeding fresh air (7) to the at least one combustion chamber (3).

## Revendications

1. Installation de gaz frais (6) pour alimenter de l'air frais (7) dans au moins une chambre de combustion (3) d'un moteur à combustion interne,
- dans laquelle l'installation de gaz frais (6) présente au moins une conduite d'air frais (9 ;65),
- dans laquelle dans la conduite d'air frais (9 ;65) un mélangeur en forme de fleur (16) est disposé, qui divise un courant d'air frais (20) guidé lors du fonctionnement du moteur à combustion interne (1) dans la conduite d'air frais (8 ;65) du côté amont en au moins deux courants partiels (21,23) et du côté aval le réunit à nouveau en formant un tourbillonnement (25),
- dans laquelle le mélangeur en forme de fleur (16) présente un corps de tôle (27), qui présente un côté amont (28) et un côté aval (29) avec une structure en forme de fleur (30) et qui divise la conduite d'air frais (8 ;65) à partir d'une arête amont (21) du corps de tôle (27) jusqu'à une arête aval (24) du corps de tôle (27) en deux portions de conduite (31,32) parallèles travées par un écoulement,
- dans laquelle un point d'introduction (15 ;64) peut être raccordé par l'intermédiaire d'une conduite de réintroduction (13 ;61) d'une installation de réintroduction de gaz d'échappement (12 ;60) du moteur à combustion interne (1) à la conduite d'air frais (8 ;65), afin de réintroduire du gaz d'échappement (48) dans l'air frais (20) en amont du mélangeur en forme de fleur (16) ou au niveau du mélangeur en forme de fleur (16),
**caractérisée en ce que**
- le point d'introduction (15 ;64) est positionné relativement au mélangeur en forme de fleur (16) de telle sorte que le gaz d'échappement réintroduit (48) s'écoule seulement dans une des portions de conduite (32),
- dans la conduite d'air frais (8 ;65) en amont du point d'introduction (15 ;64) un élément de conduction de courant (52) est disposé, qui est ajustable afin d'empêcher plus ou moins l'écoulement d'air frais (20) vers une des portions de conduite (32) en fonction de sa position.

2. Installation d'air frais selon la revendication 1, **caractérisée en ce que** la structure en forme de fleur (30) présente plusieurs ondulations (34), qui sont disposées côté à côte transversalement à la direction d'écoulement (35) à travers la conduite d'air frais (8 ;65).

3. Installation d'air frais selon la revendication 2, **caractérisée en ce que**
- l'amplitude des ondes (34) s'accroit dans la direction d'écoulement (35), ou
- les ondulations (34) présentent des lignes de sommet (36) en ligne droite, ou
- les ondulations (34) présentent des sommets d'ondulations (37) et des creux d'ondulations (38) ronds, notamment en forme de demi-cercle, entre lesquels des portions de transition (39) en ligne droite s'étendent, qui peuvent notamment s'étendre parallèlement les unes aux autres, ou
- les ondulations (34) commencent sur une extrémité du côté amont (28) espacée de l'arête amont (21), ou
- les ondulations (34) sont conçues symétriquement de part et d'autre d'un plan de séparation (33), dans laquelle le corps de tôle (27) sépare les deux portions de conduite (31,32) l'une de l'autre.

4. Installation d'air frais selon une des revendications 1 à 3, **caractérisée en ce que**
- l'arête amont (21) est conçue en ligne droite, ou
- le côté amont (28) a une configuration plane.

5. Installation d'air frais selon la revendication 4, **caractérisée en ce que** l'arête amont (21) s'étend transversalement à la direction d'écoulement (35) à travers la conduite d'air frais (8 ;65).

6. Installation d'air frais selon la revendication 1, **caractérisée en ce que** la structure en forme de fleur (30) présente plusieurs ondulations (34), qui sont disposées côte à côte dans la direction circonférentielle de la conduite d'air frais (8 ;65).

7. Installation d'air frais selon une des revendications 1 à 6, **caractérisée en ce que** le mélangeur en forme de fleur (16) ou le corps de tôle (27) peuvent être ajustés au moyen d'un dispositif de réglage (41) en ce qui concerne leur position relative par rapport à la conduite d'air frais (8 ;65).

8. Installation d'air frais selon la revendication 7, **caractérisée en ce que** le dispositif de réglage (41) permet un déplacement transversal (42) du corps de tôle (27) dans la conduite d'air frais (8 ;65) transversalement à un plan de séparation (33), dans laquelle le corps de tôle (27) sépare les deux portions de conduite (31,32) l'une de l'autre.

9. Installation d'air frais selon les revendications 7 ou 8, **caractérisée en ce que** le dispositif de réglage (41) permet un déplacement rotatif (45) du corps de tôle (27) autour d'un axe de rotation (46) s'étendant parallèlement à la direction d'écoulement (35).

10. Installation d'air frais selon une des revendications 7 à 9, **caractérisée en ce que** le dispositif de réglage (41) permet un déplacement pivotant (43) du corps de tôle (27) autour d'un axe de pivot (44) s'étendant transversalement à la direction d'écoulement (35) et situé dans un plan de séparation (33), dans laquelle le corps de tôle (27) sépare les deux portions de conduite (31,32) l'une de l'autre.

11. Installation d'air frais selon une des revendications 7 à 10, **caractérisée en ce que** le dispositif de réglage (41) permet un déplacement longitudinal (47) du corps de tôle (27) parallèlement à la direction d'écoulement (35).

12. Installation d'air frais selon une des revendications 7 à 11, **caractérisée en ce que**
- le point d'introduction (15 ;64) est conçu à travers une ouverture radiale (49), qui est prévue dans une paroi (40) de la conduite d'air frais (8 ;65), ou
- le point d'introduction (15 ;64) est conçu à travers une ouverture radiale, qui se trouve à une extrémité d'un tube introducteur, qui saille à travers une paroi (40) à l'intérieur de la conduite d'air frais (8 ;65).

13. Installation d'air frais selon une des revendications 1 à 12, **caractérisée en ce que** l'élément de conduction de courant (52) peut être basculé dans une position de blocage, dans laquelle il bloque l'écoulement d'air frais (20) vers une des portions de conduite (32).

14. Installation d'air frais selon une des revendications 1 à 13, **caractérisée en ce que** la conduite d'air frais (8 ;65) se ramifie en au moins deux portions d'extrémité (17), qui sont raccordées par l'intermédiaire d'une soupape d'admission respective (4) à une chambre de combustion (3), dans laquelle le mélangeur en forme de fleur (16) est disposé en amont de cette ramification (19).

15. Moteur à combustion interne (1), notamment d'un véhicule automobile, comportant un moteur à piston (2), qui présente au moins une chambre de combustion (3) et comportant une installation d'air frais (6) selon une des revendications 1 à 14 pour alimenter de l'air frais (7) dans au moins une chambre de combustion (3).
